# EUROPÄISCHE PATENTANMELDUNG

(11) **EP 1 983 468 A2**
(43) Veröffentlichungstag der Anmeldung: **22.10.2008**
(21) Anmeldenummer: 08004520.6
(22) Anmeldetag: 12.03.2008
(51) Int. Cl.: G06K 7/00

(54) **Verfahren und Vorrichtung zum Schutz gegen Fernauslesen von Warenkennzeichnungsdaten**

(30) Priorität: 13.04.2007 DE 102007017864
(71) Anmelder: ASTRA Gesellschaft für Asset Management mbH & Co. KG, 30890 Barsinghausen (DE)
(72) Erfinder: Stobbe, Anatoli, 30890 Barsinghausen (DE)
(74) Vertreter: Körner, Peter

(57) **Zusammenfassung**

Es wird ein Verfahren zum Schutz gegen Fernauslesen von Warenkennzeichnungsdaten nach Übergabe der Waren an einen Kunden beschrieben.

Die Ware trägt vor der Übergabe ein Etikett, auf dem ein elektronischer Chip mit einem Koppelelement und eine mit dem Koppelelement gekoppelte elektrische Antenne angeordnet sind. Nach Registrierung der Warenkennzeichnungsdaten im Kassenbereich wird die Kopplung zwischen dem Koppelelement und der elektrischen Antenne verringert oder beseitigt oder die elektrische Antenne verstimmt oder zerstört.

## Beschreibung

Die Erfindung betrifft ein Verfahren zum Schutz gegen Fernauslesen von Warenkennzeichnungsdaten nach dem Oberbegriff des Anspruchs 1 sowie eine Vorrichtung zum Schutz gegen Fernauslesen von Warenkennzeichnungsdaten nach dem Oberbegriff des Anspruchs 16.

Waren werden üblicherweise vom Hersteller oder Händler mit Etiketten versehen, die Warenkennzeichnungsdaten tragen und bei Arbeitsgängen der Herstellung, des Transports, der Inventur und beim Verkauf vorzugsweise maschinell gelesen werden. Durch den Einsatz von RFID-Technologie ist kein optischer Sichtkontakt zwischen den Etiketten und dem Lesegerät nötig. Die Lesereichweite im UHF-Frequenzbereich und höher liegt bei mehreren Metern und vereinfacht dadurch die Handhabung.

Der Nachteil einer großen Lesereichweite eröffnet allerdings auch Missbrauchsmöglichkeiten. So könnten Wettbewerber oder andere Institutionen durch verborgen aufgestellte Lesegeräte das Einkaufs- und Bewegungsprofil von Personen erfassen und dadurch unzulässig in deren Privatsphäre eingreifen.

Der Erfindung liegt die Aufgabe zugrunde, ein Verfahren und eine Vorrichtung anzugeben, um Kunden, die mit Etiketten in RFID-Technologie versehenen Waren erworben haben, vor Ausspähen ihrer Privatsphäre zu schützen.

Diese Aufgabe wird bei einem Verfahren nach dem Oberbegriff des Anspruchs 1 durch die Merkmale dieses Anspruchs und bei einer Vorrichtung nach dem Oberbegriff des Anspruchs 16 durch die Merkmale jenes Anspruchs gelöst.

Weiterbildungen und vorteilhafte Ausgestaltungen ergeben sich aus den jeweiligen Unteransprüchen.

Die erfindungsgemäßen Lösungen ermöglicht es, die vorteilhaft große Lesereichweite der Etiketten bis zur Übergabe der Ware an den Kunden zu gewährleisten und damit auch die Registrierung der Warenkennzeichnungsdaten im Kassenbereich zu erleichtern. Anschließend wird jedoch die Lesereichweite soweit verringert, dass ein Ausspähen der Privatsphäre des Kunden sicher verhindert wird. Gleichwohl bleiben die Warenkennzeichnungsdaten für eventuelle Reklamationszwecke erhalten.

Dies wird dadurch erreicht, dass die Kopplung zwischen einem den Chip mit dem Koppelelement bildenden Detektierplättchen einerseits und der elektrischen Antenne andererseits vermindert oder beseitigt wird oder die elektrische Antenne selbst verstimmt oder zerstört wird. Ein Auslesen der im Chip gespeicherten Warenkennzeichnungsdaten ist dann nicht mehr im Fernfeld möglich. Da das Detektierplättchen mit dem Chip und dem Koppelelement als solches aber funktionsfähig bleibt, können die Warenkennzeichnungsdaten und das beim Kauf ggf. eingeschriebene Datum, beispielsweise das Kaufdatum, mit einem speziellen Lesegerät im Nahfeld gelesen werden. Dies betrifft sowohl den Fall, dass das Detektierplättchen an der Ware verbleibt als auch dass das Detektierplättchen dem Kunden zur Aufbewahrung ausgehändigt wurde.

Die Beseitigung der Kopplung kann alternativ durch folgende Maßnahmen vorgenommen werden: Nach einer ersten Alternative kann ein Detektierplättchen mit dem Chip und dem Koppelelement zerstörungslos vom Etikett gelöst werden, während die elektrische Antenne in oder auf dem Etikett und das Etikett an der Ware verbleibt. Nach einer zweiten Alternative kann ein Träger mit der elektrischen Antenne vom Etikett gelöst und entsorgt werden, während das Detektierplättchen mit dem Chip und dem Koppelelement in oder auf dem Etikett und das Etikett an der Ware verbleibt. Nach einer dritten Alternative kann das Koppelelement verändert oder die elektrische Antenne verstimmt oder zerstört werden. In diesem Fall können alle Bestandteile in oder auf dem Etikett und das Etikett an der Ware verbleiben.

Das Etikett selbst ist mit der Ware fest verbundenen, so dass Manipulationen erkennbar werden, wenn das Etikett gewaltsam entfernt wurde oder vor der Registrierung im Kassenbereich eine Veränderung entsprechen den vorerwähnten Alternativen vorgenommen wurde.

Trotz der Verminderung oder Beseitigung der Kopplung oder der Verstimmung oder Zerstörung der elektrischen Antenne nach der Registrierung im Kassenbereich bleibt das Detektierplättchen mit dem Chip und dem Koppelelement funktionsfähig und kann mit einem speziellen Lesegerät im Nahfeld oder einem Kombigerät im Kassenbereich im Nah- und Fernfeld gelesen werden. Dies betrifft sowohl den Fall, dass das Detektierplättchen an der Ware verbleibt als auch dem Kunden zur Aufbewahrung ausgehändigt wurde. Eine spätere Überprüfung von Warenkennzeichnungsdaten und beispielsweise Kaufdatum ist daher möglich.

Sofern das Detektierplättchen vom Etikett gelöst wird, kann es vorzugsweise auf dem Kassenbeleg befestigt werden, so dass dadurch eine mechanische Verknüpfung zwischen elektronischen Warenkennzeichnungsdaten und gedruckten Daten hergestellt wird. Ferner wird dem Kunden die Aufbewahrung erleichtert und ein besserer Schutz gegen Verlust erreicht.

Auch wenn der Kunde das Detektierplättchen und die Ware mit der im oder am Etikett verbleibenden elektrischen Antenne gemeinsamen mit sich führt, ist ein Fernauslesen nicht möglich, da keine Kopplung mehr zwischen dem Detektierplättchen und der elektrischen Antenne besteht.

Wenn dem Kunden ein Rückgaberecht eingeräumt wird und er davon Gebrauch machen möchte, wäre es allerdings nachteilig, die Kopplung zu beseitigen, da eine erneute Kopplung nicht zuverlässig gewährleistet werden kann. In diesem Falle kann gemäß einer Weiterbildung der Chip vorübergehend abgeschaltet werden, damit die Warenkennzeichnungsdaten nicht ohne weiteres im Fernfeld gelesen werden können. Dabei wird vorübergehend in Kauf genommen, dass die Abschaltung missbräuchlich auch rückgängig gemacht werden kann. Die Möglichkeit eines Missbrauchs ist aber vergleichsweise gering und auch nur vorübergehend möglich, wenn nach Ablauf der Rückgabefrist der Chip mit dem Koppelelement von der elektrischen Antenne oder umgekehrt nachträglich gelöst wird.

Gemäß einer Weiterbildung kann am zu lösenden und zu trennenden Bestandteil des Etiketts ein Nippel oder eine Reißleine befestigt sein und durch Ziehen am Nippel oder der Reißleine die Kopplung vermindert oder beseitigt oder die elektrische Antenne verstimmt oder zerstört werden. Dies erleichtert wesentlich die Handhabung und vermeidet eine Beschädigung des Detektierplättchens.

Bei einer weiteren Ausführung können auch Schleifen der Antenne soweit vorstehen, dass sie mit einer Schere durchtrennt werden können.

Auch ist es möglich, Kontaktfelder vorzusehen, über die eine Stromquelle zum elektrischen Durchtrennen des Antennenleiters oder einer Koppelschleife eines Mehrfachkoppelelements auf dem Detektierplättchen angelegt werden kann.

Weiter kann der Chip bei Registrierung der Warenkennzeichnungsdaten mit einem Datum beschrieben werden. Bei diesem Datum kann es sich um einen Kaufdatum, ein Ende der Rückgabefrist, Ende der Gewährleistungsfrist oder Ende der Garantiefrist handeln. Dadurch ist im Reklamationsfall eine einfache Überprüfung möglich, ob die Reklamation noch innerhalb einer gesetzlichen oder vom Händler gewährten Frist vorgetragen wird. Da Hersteller weltweit unterschiedliche Gewährleistungszeiten geben, werden Manipulationen des Datums und Grauimporte erschwert.

Das vollständige Etikett mit dem den elektronischen Chip und das Koppelelement umfassenden Detektierplättchen und der elektrischen Antenne kann mit einer elektrischen Leseantenne im Fernfeld gelesen werden. Dadurch ist neben einer leichteren Datenerfassung bei Arbeitsgängen während der Herstellung, beim Transport, im Lager und vor allem bei einer Inventur im Verkaufsbereich auch eine schnellere Registrierung im Kassenbereich möglich. Im Gegensatz zu optischen Scannern, die einen Sichtkontakt mit dem Etikett benötigen, reicht es aus, dass sich die Ware irgendwo im Lesefeld einer Leseantenne befindet. Auch eine nahezu gleichzeitige Registrierung mehrerer Waren ist möglich, wenn beim Lesen ein Antikollisionsverfahren angewendet wird.

Zusätzlich kann das vollständige Etikett auch im Ausgangsbereich gelesen werden, und zwar zur Kontrolle, dass das Kassenpersonal das Detektierplättchen oder die elektrische Antenne korrekt entfernt hat, sowie auch zum Schutz vor Diebstahl. Dazu befindet sich im Ausgangsbereich ein UHF-Lesegerät mit elektrischer Antenne, das mit einem konventionellen EAS-Lesegerät (EAS = Electronic Article Surveillance) als Dual-Leser kombiniert sein kann.

Nachfolgend wird die Erfindung anhand von Ausführungsbeispielen erläutert, die in der Zeichnung dargestellt sind.

In der Zeichnung zeigen:
Fig. 1 ein Textiletikett mit einer integrierten elektrischen Antenne, auf dem ein lösbares Detektierplättchen mit einem Chip und einem Koppelelement angeordnet ist,
Fig. 2 ein Textiletikett mit einem integrierten Detektierplättchen, das einen Chip und ein Koppelelement umfasst, auf dem eine lösbare Folie mit einer elektrischen Antenne angeordnet ist,
Fig. 3 ein Textiletikett, in dem sowohl das Detektierplättchen mit dem Chip und dem Koppelelement als auch die elektrischen Antenne integriert sind,
Fig. 4 ein Textiletikett mit einem einen Chip und ein Koppelelement umfassenden Detektierplättchen mit einer integrierten elektrischen Antenne und Auftrennschleifen,
Fig. 5 ein Textiletikett mit einer Folie, auf der sich ein Detektierplättchen mit einen Chip und einem Koppelelement sowie eine elektrischen Antenne mit Kontaktfeldern befinden,
Fig. 6 ein Textiletikett mit einem einen Chip und ein Koppelelement umfassenden integrierten Detektierplättchen und einer ebenfalls integrierten elektrischen Antenne mit herausgeführten Kontaktfeldern,
Fig. 7 ein Werkzeug zum elektrischen Durchtrennen des Antennenleiters,
Fig. 8 ein Textiletikett mit einem einen Chip und ein Mehrfach-Koppelelement umfassenden Detektierplättchen und einer elektrischen Antenne,
Fig. 9 Detektierplättchen mit einem Chip und einem Mehrfach-Koppelelement als Einzelheit aus Fig. 8,
Fig. 10 ein Beispiel für einen Kassenbeleg mit darauf befestigten Detektierplättchen,
Fig. 11 einen Verkaufstresen mit einer Leseantenne für ein Nahfeld und einem Lesegerät und
Fig. 12 einen Verkaufstresen mit einer Leseantenne für ein Fernfeld, einer Verstärkerantenne für ein Nahfeld und einem Lesegerät,

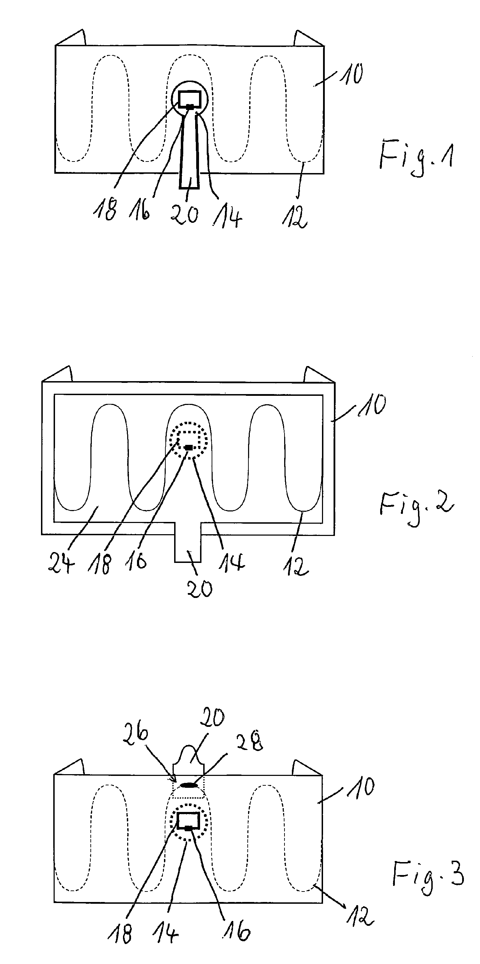

Fig. 1 zeigt ein Textiletikett 10 mit einer integrierten elektrischen Antenne 12, auf dem ein lösbares Detektierplättchen 14 mit einem Chip 16 und einem Koppelelement 18 angeordnet ist. Textiletiketten sind üblicherweise in Textilware eingenäht und tragen ein Herstellerlogo oder Pflegehinweise. Bei der Herstellung des Textiletiketts 10 kann die elektrische Antenne 12 bereits durch einen industriellen Herstellungsprozess eingearbeitet werden, z. B. durch Weben oder Sticken. Die elektrische Antenne 12 weist eine mäanderförmige Struktur auf. Darauf ist das Detektierplättchen 14 mit dem Chip 16 und dem Koppelelement 18 mittels eines Adhäsivklebers so positioniert, dass das Koppelelement 18 in der Mitte der elektrischen Antenne 12 innerhalb deren Schleife angeordnet und so mit der elektrischen Antenne 12 gekoppelt ist. Die elektrische Antenne 12 wirkt als passiver Verstärker und erhöht die Lesereichweite.

Nachdem die im Chip 16 gespeicherten Warenkennzeichnungsdaten im Kassenbereich gelesen wurden, wird das Detektierplättchen 14 gelöst und dem Kunden direkt oder zusammen mit dem Kassenbeleg übergeben, auf den es zuvor geklebt wurde. Um das Lösen des Detektierplättchens 14 zu erleichtern, ist mit dem Detektierplättchen 14 ein Nippel 20 oder eine Reißleine verbunden, an der es erfasst und abgezogen werden kann.

Fig. 2 zeigt ein Textiletikett 10 mit einem integrierten Detektierplättchen 14, das einen Chip 16 und ein Koppelelement 18 umfasst, auf dem eine lösbare Folie 24 mit einer elektrischen Antenne 12 angeordnet ist. Das Detektierplättchen 14 ist auf der Rückseite des Textiletiketts 10 an dieses angenäht, mit dem Textiletikett verklebt oder befindet sich in einer geschlossenen Tasche des Textiletiketts 10. Die Folie 24 mit der elektrischen Antenne 12 ist auf dem Textiletikett 10 mittels eines Adhäsivklebers aufgeklebt und so positioniert, dass eine mittlere Schleife der mäanderförmigen Struktur der elektrischen Antenne 12 das Koppelelement 18 teilweise umschließt.

Nachdem die im Chip 16 gespeicherten Warenkennzeichnungsdaten im Kassenbereich gelesen wurden, wird die Folie 24 mit der elektrischen Antenne 12 gelöst und entsorgt. Das Detektierplättchen 14 verbleibt dagegen am Textiletikett 10. Um das Lösen der Folie 24 zu erleichtern, ist mit der Folie 24 ein Nippel 20 oder eine Reißleine verbunden, an der sie erfasst und abgezogen werden kann.

Fig. 3 zeigt ein Textiletikett 10, in das sämtliche Bestandteile, nämlich das Detektierplättchen 14 mit dem Chip 16 und dem Koppelelement 18 und die elektrische Antenne 12 integriert sind. Die elektrische Antenne 12 weist im Bereich der mittleren Schleife der mäanderförmigen Struktur eine Solltrennstelle 26 auf, die nach Lesen der im Chip 16 gespeicherten Warenkennzeichnungsdaten im Kassenbereich aufgetrennt wird. Dies kann durch Zerschneiden, Aufreißen oder Entfernen eines Kurzschlussbügels 28 mittels eines Nippels 20 oder einer Reißleine erfolgen.

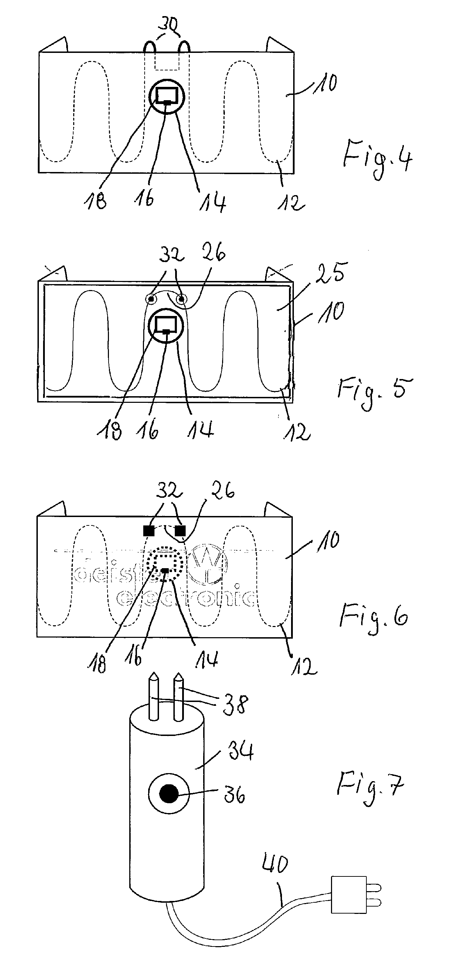

Fig. 4 zeigt ein Textiletikett 10 mit einem einen Chip 16 und ein Koppelelement 18 umfassenden Detektierplättchen 14 mit einer integrierten elektrischen Antenne 12 und Auftrennschleifen 30. Nach Lesen der im Chip 16 gespeicherten Warenkennzeichnungsdaten im Kassenbereich können die vorstehenden Auftrennschleifen 30 mit einer Schere durchschnitten werden. Dadurch wird die elektrische Antenne 12 zumindest in ihrer Resonanzfrequenz verstimmt oder zerstört.

Fig. 5 zeigt ein Textiletikett 10 mit einer Folie 25, auf der sich ein Detektierplättchen 14 mit einen Chip 16 und einem Koppelelement 18 sowie eine elektrische Antenne 12 mit Kontaktfeldern 32 befinden. Nach Lesen der im Chip 16 gespeicherten Warenkennzeichnungsdaten im Kassenbereich kann eine Stromquelle an die Kontaktfelder 32 angelegt werden, worauf der Leiter der elektrischen Antenne 12 zwischen den Kontaktfeldern 32 schmilzt und so die elektrische Antenne 12 zerstört. Die Folie 25 kann auf dem Textiletikett 10 verbleiben, da das Detektierplättchen 14 nicht mehr im Fernfeld ausgelesen werden kann.

Fig. 6 zeigt eine ähnliche Ausführung wie Fig. 5. Jedoch sind hier ein Detektierplättchen 14 mit einem Chip 16 und einem Koppelelement 18 ebenso wie eine elektrische Antenne 12 im Textiletikett 10 integriert. Mit der elektrischen Antenne 12 verbundene Kontaktfelder 32 sind herausgeführt und dadurch zum Anlegen einer Stromquelle erreichbar.

Fig. 7 zeigt ein Werkzeug zum elektrischen Durchtrennen des Antennenleiters. Das Werkzeug besteht aus einem als Griffstück dienenden Gehäuse 34 mit einem Taster 36, zwei Kontaktstiften 38 und einem Verbindungskabel 40 zu einer nicht dargestellten Stromquelle. Nach Lesen der im Chip 16 gespeicherten Warenkennzeichnungsdaten im Kassenbereich wird das Werkzeug an das Textiletikett 10 herangeführt und die Kontaktstifte 38 mit den Kontaktfeldern 32 gekoppelt. Durch Drücken des Tasters 36 wird dem Leiter der elektrischen Antenne 12 Strom zugeführt und der Leiter an der dafür vorgesehenen Sollbruchstelle 26 zerstört.

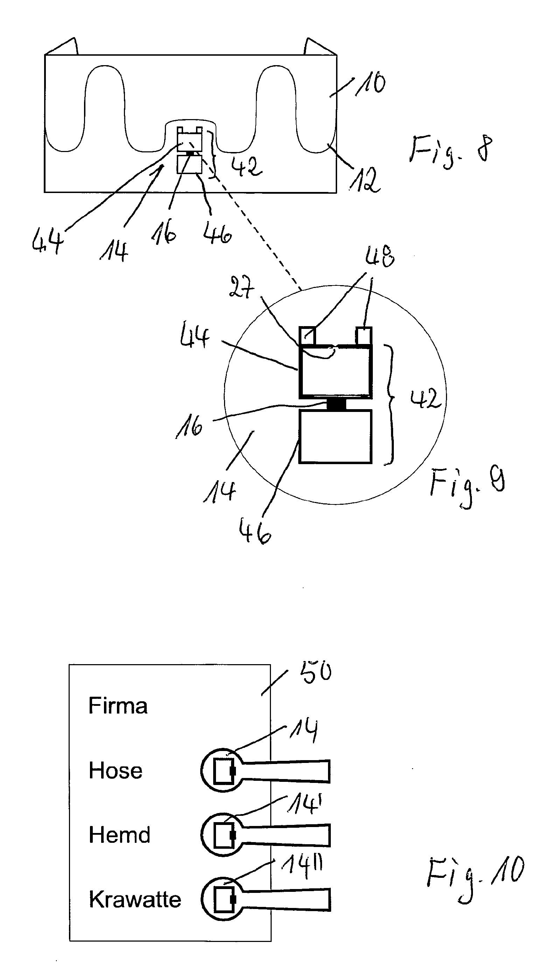

Fig. 8 zeigt ein Textiletikett 10 mit einem einen Chip 16 und ein Mehrfach-Koppelelement 42 umfassenden Detektierplättchen 14 und einer elektrischen Antenne 12. Das Mehrfach-Koppelelement 42 umfasst zwei unabhängige, jeweils mit dem Chip 16 verbundene Koppelschleifen 44, 46, von denen sich eine Koppelschleife 44 innerhalb des Koppelbereichs der elektrischen Antenne 12 und sich die andere Koppelschleife 44 außerhalb des Koppelbereichs der elektrischen Antenne 12 befindet. Durch Auftrennen der Koppelschleife 44 kann die Kopplung mit der elektrischen Antenne 12 beseitigt werden. Die Koppelschleife 46 hingegen wird nicht getrennt. Sie ermöglicht zwar keine Kopplung mit der elektrischen Antenne 12, aber ein Auslesen der im Chip 16 gespeicherten Warenkennzeichnungsdaten im Nahfeld.

Fig. 9 zeigt ein Detektierplättchen 14 mit einem Chip 16 und einem Mehrfach-Koppelelement 42 als Einzelheit aus Fig. 8.

Dabei trägt die Koppelschleife 44 zwei Kontaktfelder 48, an die eine Stromquelle zur Zerstörung des Leiters der Koppelschleife 44 zwischen den Kontaktfeldern 48 angelegt werden kann. Der Leiter der Koppelschleife 44 wird dann an der dafür vorgesehenen Sollbruchstelle 27 aufgetrennt.

Fig. 10 zeigt ein Beispiel für einen Kassenbeleg 50 mit darauf befestigten Detektierplättchen 14, 14', 14''. Der Kassenbeleg 50 enthält eine Liste der gekauften Waren und neben die Warenbezeichnungen werden die Detektierplättchen 14, 14', 14''geklebt, die ja bereits einen Adhäsivkleber tragen. So bleiben Detektierplättchen 14, 14', 14''den Warenbezeichnungen zugeordnet und können im Reklamationsfall gelesen werden.

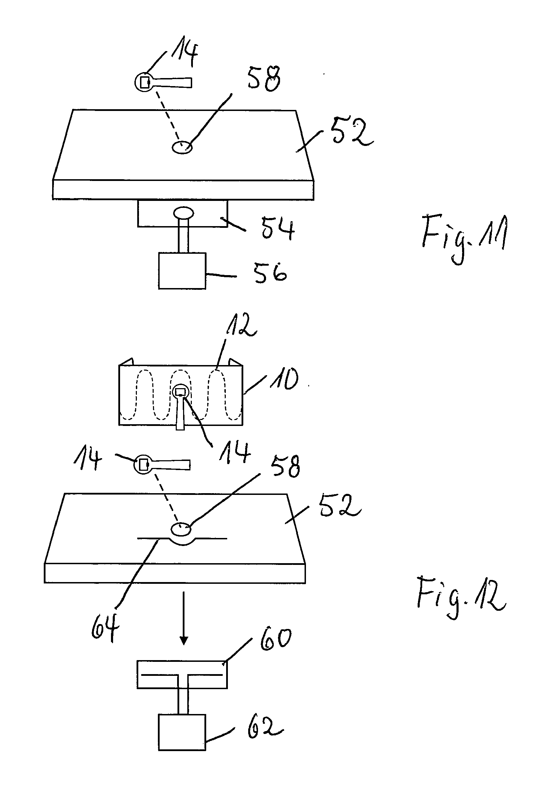

Fig. 11 zeigt einen Verkaufstresen 52 mit einer unmittelbar unter dem Tresen 52 angeordneten magnetischen Leseantenne 54 und einem Lesegerät 56. Auf dem Tresen 52 befindet sich eine Markierung 58, die die Positionierung eines Detektierplättchens 14 erleichtert. Zum Lesen von Warenkennzeichnungsdaten wird das Detektierplättchen 14 auf die Markierung 58 auf den Tresen 52 gelegt und gelangt in das Lesefeld der magnetischen Leseantenne 54, woraufhin ein Lesevorgang durchgeführt wird.

Fig. 12 zeigt einen Verkaufstresen 52 mit einer mit Abstand unter dem Tresen 52 angeordneten elektrischen Leseantenne 60 und einem Lesegerät 62. Auf dem Tresen 52 befindet sich ebenfalls eine Markierung 58 und ferner ist dort eine elektrische Verstärkerantenne 64 eingelassen. Im Falle eines Detektierplättchens 14 wird dieses auf die Markierung 58 gelegt, wodurch das Koppelelement des Detektierplättchens 14 mit der elektrischen Verstärkerantenne 64 gekoppelt wird. Dadurch wird eine Kopplung über die Verstärkerantenne 64 mit dem Lesefeld der elektrischen Leseantenne 60 erreicht, woraufhin ein Lesevorgang im Fernfeld durchgeführt wird.

Im Falle eines vollständigen Etiketts 10 mit Detektierplättchen 14 und elektrischer Antenne 12 ist eine Positionierung auf der Markierung 58 nicht nötig. Vielmehr reicht hier das Lesefeld weiter, so dass der Lesevorgang bereits bei Annäherung des Etiketts 10 an den Tresen 52 durchgeführt wird.

## Patentansprüche

1. Verfahren zum Schutz gegen Fernauslesen von Warenkennzeichnungsdaten nach Übergabe der Waren an einen Kunden, wobei die Ware vor der Übergabe ein Etikett (10) trägt, auf dem ein elektronischer Chip (16) mit einem Koppelelement (18) und eine mit dem Koppelelement (18) gekoppelte elektrische Antenne (12) angeordnet sind, **dadurch gekennzeichnet, dass** nach Registrierung der Warenkennzeichnungsdaten die Kopplung zwischen dem Koppelelement (18) und der elektrischen Antenne (12) vermindert oder beseitigt wird oder die elektrischen Antenne (12) verstimmt oder zerstört wird.

2. Verfahren nach Anspruch 1, **dadurch gekennzeichnet, dass** bei Rückgaberecht der Ware der Chip (16) elektronisch vorübergehend abgeschaltet wird, ehe die Kopplung vermindert oder beseitigt wird oder die elektrischen Antenne (12) verstimmt oder zerstört wird.

3. Verfahren nach Anspruch 1 oder 2, **dadurch gekennzeichnet, dass** zur Beseitigung der Kopplung ein lösbar auf dem Etikett (10) befestigtes Detektierplättchen (14), das der Chip (16) mit dem Koppelelement (18) trägt, zerstörungsfrei vom Etikett (10), welches die elektrische Antenne (12) enthält, gelöst wird.

4. Verfahren nach Anspruch 1 oder 2, **dadurch gekennzeichnet, dass** zur Beseitigung der Kopplung ein lösbar auf dem Etikett (10) befestigter Träger (24) mit der elektrischen Antenne (12) vom Etikett (10) mit dem einen Chip (16) und ein Koppelelement (18) umfassenden Detektierplättchen (14) gelöst wird.

5. Verfahren nach Anspruch 1 oder 2, **dadurch gekennzeichnet, dass** zur Verstimmung oder Zerstörung der elektrischen Antenne (12) eine Solltrennstelle (26) im Bereich der mittleren Schleife der mäanderförmigen Struktur der elektrischen Antenne (12) aufgetrennt wird.

6. Verfahren nach Anspruch 1 oder 2, **dadurch gekennzeichnet, dass** zur Verstimmung oder Zerstörung der elektrischen Antenne (12) vorstehende Schleifen (30) des Antennenleiters mechanisch aufgetrennt werden.

7. Verfahren nach Anspruch 1 oder 2, **dadurch gekennzeichnet, dass** zur Verstimmung oder Zerstörung der elektrischen Antenne (12) mit dem Antennenleiter verbundene und an der Oberfläche des Etiketts (10) angeordnete Kontaktfelder (32) über ein Werkzeug mit einer Stromquelle verbunden werden und der Antennenleiter an einer Sollbruchstelle (26) unter dem Stromfluss durch Schmelzen aufgetrennt wird.

8. Verfahren nach Anspruch 1 oder 2, **dadurch gekennzeichnet, dass** zur Verringerung oder Beseitigung der Kopplung zwischen einem Koppelelement und der elektrischen Antenne (12) an einer Koppelschleife (44) eines Mehrfachkoppelelements (42) auf dem Detektierplättchen (14) angeordnete Kontaktfelder (48) über ein Werkzeug mit einer Stromquelle verbunden werden und die Koppelschleife (44) an einer Sollbruchstelle (27) unter dem Stromfluss durch Schmelzen aufgetrennt wird.

9. Verfahren nach einem der Ansprüche 1 bis 5, **dadurch gekennzeichnet, dass** am zu lösenden und zu trennenden Bestandteil des Etiketts (10) ein Nippel (20) oder eine Reißleine befestigt ist und durch Ziehen am Nippel (20) oder der Reißleine die Kopplung zwischen dem Koppelelement (18) und der elektrischen Antenne (12) beseitigt oder die elektrische Antenne (12) verstimmt oder zerstört wird.

10. Verfahren nach einem der Ansprüche 1 bis 9, **dadurch gekennzeichnet, dass** nach Verminderung oder Beseitigung der Kopplung oder Verstimmung oder Zerstörung der elektrischen Antenne (12) das Etikett (10) mit den verbleibenden Bestandteilen an der Ware belassen wird.

11. Verfahren nach Anspruch 3, **dadurch gekennzeichnet, dass** das gelöste Detektierplättchen (14) auf dem Kassenbeleg (50) befestigt wird.

12. Verfahren nach Anspruch 1, **dadurch gekennzeichnet, dass** das vollständige Etikett (10) mit dem den elektronischen Chip (16) und das Koppelelement (18) umfassenden Detektierplättchen (14) und der elektrischen Antenne (12) bei intakter Kopplung im Kassenbereich zur Registrierung der Warenkennzeichnungsdaten mit einer elektrischen Leseantenne (60) im Fernfeld oder einer magnetischen Antenne (54) im Nahfeld gelesen wird.

13. Verfahren nach Anspruch 1, **dadurch gekennzeichnet, dass** das vollständige Etikett (10) mit dem den elektronischen Chip (16) und das Koppelelement (18) umfassenden Detektierplättchen (14) und der elektrischen Antenne (12) bei intakter Kopplung zur Diebstahlssicherung im Ausgangsbereich mit einer elektrischen Leseantenne im Fernfeld gelesen wird.

14. Verfahren nach Anspruch 13, **dadurch gekennzeichnet, dass** die zusätzlich mit einem konventionellen EAS-Modul - EAS = Electronic Article Surveillance - ausgestattete Ware im Ausgangsbereich mit einer EAS-Leseantenne, die mit der elektrischen Leseantenne kombiniert ist, gelesen wird.

15. Verfahren nach einem der Ansprüche 3 bis 9, **dadurch gekennzeichnet, dass** das Detektierplättchen (14) mit dem Chip (16) und dem Koppelelement (18) nach Beseitigung der Kopplung von der elektrischen Antenne (12) des Etiketts (10) mit einer magnetischen Leseantenne (54) im Nahfeld gelesen wird.

16. Verfahren nach einem der Ansprüche 3 bis 9, **dadurch gekennzeichnet, dass** das Detektierplättchen (14) mit dem Chip (16) und dem Koppelelement (18) nach Beseitigung der Kopplung von der elektrischen Antenne (12) des Etiketts (10) durch Kopplung über eine passive Verstärkerantenne (64) mit einer elektrischen Leseantenne (60) im Fernfeld gelesen wird.

17. Vorrichtung zum Schutz gegen Fernauslesen von Warenkennzeichnungsdaten nach Übergabe der Waren an einen Kunden, wobei die Ware vor der Übergabe ein Etikett (10) trägt, auf dem ein elektronischer Chip (16) mit einem Koppelelement (18) und eine mit dem Koppelelement (18) gekoppelte elektrische Antenne (12) angeordnet sind, **gekennzeichnet durch** eine Sicherungsvorrichtung gegen Fernauslesen, mittels der nach Registrierung der Warenkennzeichnungsdaten die Kopplung zwischen dem Koppelelement (18) und der elektrischen Antenne (12) verringerbar oder beseitigbar ist oder die elektrische Antenne (12) verstimmbar oder zerstörbar ist.

18. Vorrichtung nach Anspruch 17, **dadurch gekennzeichnet, dass** bei Rückgaberecht der Ware der Chip (16) elektronisch vorübergehend abschaltbar ist, ehe die Kopplung beseitigt wird.

19. Vorrichtung nach Anspruch 17 oder 18, **dadurch gekennzeichnet, dass** die Sicherungsvorrichtung ein lösbar auf dem Etikett (10) befestigtes Detektierplättchen (14) mit einem Chip (16) einem Koppelelement (18) umfasst, mittels der es zerstörungsfrei vom Etikett (10), welches die elektrische Antenne (12) enthält, lösbar ist.

20. Vorrichtung nach Anspruch 17 oder 18, **dadurch gekennzeichnet, dass** die Sicherungsvorrichtung einen lösbar auf dem Etikett (10) befestigten Träger (24) mit der elektrischen Antenne (12) umfasst, mittels dem es vom Etikett (10) mit dem einen Chip (16) und ein Koppelelement (18) umfassenden Detektierplättchen (14) lösbar ist.

21. Vorrichtung nach Anspruch 17 oder 18, **dadurch gekennzeichnet, dass** die Sicherungsvorrichtung eine Solltrennstelle (26) im Bereich der mittleren Schleife der mäanderförmigen Struktur der elektrischen Antenne (12) umfasst, mittels der sie auftrennbar ist.

22. Vorrichtung nach Anspruch 17 oder 18, **dadurch gekennzeichnet, dass** die Sicherungsvorrichtung vorstehende Schleifen (30) des Antennenleiters umfasst, die mechanisch auftrennbar sind.

23. Vorrichtung nach Anspruch 17 oder 18, **dadurch gekennzeichnet, dass** die Sicherungsvorrichtung mit dem Antennenleiter verbundene und an der Oberfläche des Etiketts (10) angeordnete Kontaktfelder (32) umfasst, die über ein Werkzeug mit einer Stromquelle zum Auftrennen des Antennenleiters an einer Sollbruchstelle (26) durch Schmelzen verbindbar sind.

24. Vorrichtung nach Anspruch 17 oder 18, **dadurch gekennzeichnet, dass** die Sicherungsvorrichtung mit einer Koppelschleife (44) eines Mehrfachkoppelelements (42) auf dem Detektierplättchen (14) verbundene Kontaktfelder (48) umfasst, die über ein Werkzeug mit einer Stromquelle zum Auftrennen der Koppelschleife (44) an einer Sollbruchstelle (27) durch Schmelzen verbindbar sind.

25. Vorrichtung nach einem der Ansprüche 17 bis 22, **dadurch gekennzeichnet, dass** die Sicherungsvorrichtung am zu lösenden und zu trennenden Bestandteil des Etiketts (10) einen Nippel (20) oder eine Reißleine umfasst und durch Ziehen am Nippel (20) oder der Reißleine die Kopplung zwischen dem Koppelelement (18) und der elektrischen Antenne (12) beseitigbar ist.

26. Vorrichtung nach einem der Ansprüche 16 bis 23, **dadurch gekennzeichnet, dass** nach Verminderung oder Beseitigung der Kopplung oder Verstimmung oder Zerstörung der elektrischen Antenne (12) das Etikett (10) mit den verbleibenden Bestandteilen an der Ware verbleibt.

27. Vorrichtung nach Anspruch 19, **dadurch gekennzeichnet, dass** das gelöste Detektierplättchen (14) auf dem Kassenbeleg (50) befestigbar ist.

28. Vorrichtung nach Anspruch 17, **dadurch gekennzeichnet, dass** das vollständige Etikett (10) mit dem den elektronischen Chip (16) und das Koppelelement (18) umfassenden Detektierplättchen (14) und der elektrischen Antenne (12) bei intakter Kopplung im Kassenbereich zur Registrierung der Warenkennzeichnungsdaten mit einer elektrischen Leseantenne (60) im Fernfeld oder einer magnetischen Antenne (54) im Nahfeld lesbar ist.

29. Vorrichtung nach Anspruch 17, **dadurch gekennzeichnet, dass** das vollständige Etikett (10) mit dem den elektronischen Chip (16) und das Koppelelement (18) umfassenden Detektierplättchen (14) und der elektrischen Antenne (12) bei intakter Kopplung zur Diebstahlssicherung im Ausgangsbereich mit einer elektrischen Leseantenne im Fernfeld lesbar ist.

30. Vorrichtung nach Anspruch 29, **dadurch gekennzeichnet, dass** die Ware zusätzlich mit einem konventionellen EAS-Modul - EAS = Electronic Article Surveillance - ausgestattet ist und im Ausgangsbereich mit einer EAS-Leseantenne, die mit der elektrischen Leseantenne kombiniert ist, lesbar ist.

31. Vorrichtung nach einem der Ansprüche 19 bis 24, **dadurch gekennzeichnet, dass** das Detektierplättchen (14) mit dem Chip (16) und dem Koppelelement (18) nach Beseitigung der Kopplung von der elektrischen Antenne (12) des Etiketts (10) mit einer magnetischen Leseantenne (54) im Nahfeld lesbar ist.

32. Vorrichtung nach einem der Ansprüche 19 bis 24, **dadurch gekennzeichnet, dass** das Detektierplättchen (14) mit dem Chip (16) und dem Koppelelement (18) nach Beseitigung der Kopplung von der elektrischen Antenne (12) des Etiketts (10) durch Kopplung über eine passive Verstärkerantenne (64) mit einer elektrischen Leseantenne (60) im Fernfeld lesbar ist.
